# EUROPÄISCHE PATENTSCHRIFT

(11) **EP 0 515 772 B1**
(45) Veröffentlichungstag und Bekanntmachung des Hinweises auf die Patenterteilung: **28.09.1994**
(21) Anmeldenummer: 92101925.3
(22) Anmeldetag: 05.02.1992
(51) Int. Cl.: F01L 3/10, F01L 1/14, F16B 21/16

(54) **Ventiltrieb im Zylinderkopf einer Verbrennungskraftmaschine**
Valve drive for internal combustion engine cylinder head
Commande de soupape pour culasse de moteur à combustion interne

(30) Priorität: 28.05.1991 DE 4117406
(43) Veröffentlichungstag der Anmeldung: 02.12.1992
(73) Patentinhaber: Firma Carl Freudenberg, 69469 Weinheim (DE)
(72) Erfinder: Döhring, Klaus, W-6900 Heidelberg (DE)

(56) Entgegenhaltungen:
- EP-A- 0 090 105
- EP-A- 0 341 227
- EP-A- 0 396 327
- DE-A- 2 062 970
- DE-A- 2 949 413
- DE-A- 3 913 530
- FR-A- 646 579
- FR-A- 913 363
- GB-A- 219 894
- GB-A- 764 577
- US-A- 5 007 781

## Beschreibung

Die Erfindung betrifft einen Zylinderkopf einer Verbrennungskraftmaschine mit Ventiltrieb, umfassend einen Tassenstößel, der auf einen Ventilschaft eines Ventils aufgestpülpt und befestigt ist, einen am Ventilschaft festgelegten Ventilfederteller und zumindest eine Ventilfeder, die in Bewegungsrichtung des Ventils einerseits im Zylinderkopf und andererseits am Ventilfederteller abgestützt ist, wobei der Tassenstößel und der Ventilfederteller einstückig ausgebildet sind und wobei der Tassenstößel zumindest zweiteilig ausgebildet ist, wobei der erste Teil durch ein im wesentlichen topfförmiges Gehäuse und der zweite Teil durch eine im Gehäuse kraft- und/oder formschlüssig angeordnete Klemmvorrichtung gebildet ist.

Ein derartiger Zylinderkopf einer Verbrennungskraftmaschine mit Ventiltrieb ist aus der EP-A-0 090 105 bekannt. Der Ventilschaft wird durch ein Paßstück in einer konischen Aufnahme gehalten, wobei die Aufnahme durch ein Feder- Widerlager verschlossen ist.

Aus der DE-A-29 49 413 ist ein Ventiltrieb bekannt, bei dem die Rückstellkräfte durch eine Kombination aus Schraubendrehfeder und pneumatischer Feder auf das Ventil übertragen werden. Die Rückstellkräfte sind drehzahlabhängig durch die pneumatische Ventilfeder veränderbar. Bei höheren Motordrehzahlen stellen sich aufgrund der Ausgestaltung der Vorrichtung größere Rückstellkräfte ein, die den Tassenstößel in Ventilschließrichtung belasten und somit die Rückstellkräfte der Schraubenfeder unterstützen.

Aus der DE-OS 38 08 542 ist ein Ventiltrieb bekannt, bei dem der Ventilfederteller durch einen Kolben gebildet ist, der am Ventilschaft festgelegt und durch in radialer Richtung am Außenumfang des Kolbens angeordnete Dichtungen die Innenfläche eines Tassenstößels dichtend berührt. Eine kräftemäßige Parallelschaltung von einer mechanischen Schließfeder und einer pneumatischen Schließfeder bewirkt, in Abhängigkeit von der jeweiligen Motordrehzahl, eine zuverlässige Betätigung des Ventils. Dabei ist allerdings zu beachten, daß der Ventilschaft eine vergleichsweise große Länge aufweist, wodurch die Haltbarkeit verringert wird, sich eine größere zu beschleunigende Masse des Ventils sowie eine relativ problematische Tolerierung der Passungen ergibt.

Eine relativ komplizierte und aufwendig herzustellende Schließvorrichtung zum Schließen und Öffnen von nockengesteuerten Ventilen ist aus der DE-OS 20 09 461 bekannt. Abgesehen von dem vergleichsweise komplizierten inneren Aufbau des Ventiltriebes ist die Bauhöhe im Hinblick auf möglichst flachbauende Zylinderköpfe und eine gute Aerodynamik des Kraftfahrzeuges, in dem die Verbrennungskraftmaschine zur Anwendung gelangt, wenig befriedigend.

Der Erfindung liegt die Aufgabe zugrunde, einen Ventiltrieb der eingangs genannten Art derart weiterzuentwickeln, daß sich eine verringerte Bauhöhe durch kürzere, mechanisch weniger stark belastete Ventilschäfte ergibt, daß sich die zu beschleunigenden Massen reduzieren und sich eine wirtschaftlich günstige Herstellbarkeit ergibt.

Diese Aufgabe wird bei einem gattungsgemäßen Ventiltrieb mit dem kennzeichnenden Merkmal von Patentanspruch 1 gelöst. Auf vorteilhafte Ausgestaltungen nehmen die Unteransprüche Bezug.

Bei dem erfindungsgemäßen Ventiltrieb ist die Klemmvorrichtung durch einen Hohlzylinder gebildet, wobei der Hohlzylinder auf seiner in radialer Richtung außenliegenden Mantelfläche ein Außengewinde aufweist, wobei der Hohlzylinder eine zumindest teilweise kegelförmige Innenfläche aufweist, wobei der Tassenstößel durch zumindest ein Paßstück am Ventilschaft festgelegt ist, wobei das Paßstück in radialer Richtung zwischen dem Ventilschaft und der Klemmvorrichtung angeordnet ist und wobei das Paßstück von einem radial nach innen weisenden Vorsprung des Gehäuses untergriffen und mit diesem verspannt ist.

Hierbei ist von Vorteil, daß der Ventiltrieb besonders einfach montiert und bedarfsweise auch wieder demontiert werden kann. Zur Reduzierung der zu beschleunigenden Massen kann der Tassenstößel zumindest teilweise aus polymerem Werkstoff bestehen. Bei einer solchen Ausbildung ergibt sich, je nach Zielsetzung, aufgrund der geringeren Masse bei gleicher Beschleunigung des Ventils in axialer Richtung eine geringere Belastung und somit weniger Verschleiß der beanspruchten Teile oder bei gleicher Kraft eine größere Beschleunigung des Ventils und somit ein besserer Wirkungsgrad der Verbrennungskraftmaschine. Die Anbindung des Ventilschaftes an den Tassenstößel ist dabei so vorzunehmen, daß Druckkräfte und Zugkräfte übertragbar sind.

Durch die als Hohlzylinder ausgebildete Klemmvorrichtung ergibt sich eine besonders exakte, konzentrische Zuordnung von Tassenstößel zu Ventilschaft. Eine unverkantete Zuordnung von Tassenstößel und Ventilschaft bei der Montage ist dadurch besonders leicht zu erreichen.

Das Paßstück verbindet den Ventilschaft und den Tassenstößel derart, daß sowohl Zug- als auch Druckkräfte während einer langen Gebrauchsdauer zuverlässig übertragbar sind.

Bei Verwendung einer pneumatischen Ventilfeder oder einer zusätzlichen mechanischen Ventilfeder kann eine erste Dichtung in radialer Richtung zwischen dem Vorsprung des Ventilgehäuses und dem Ventilschaft angeordnet sein, wobei die Dichtung beide Teile dichtend berührt. Zur Abdichtung des Spaltes zwischen Zylinderkopf und Gehäuse kann die zylindrische Außenfläche des Tassenstößels in zumindest einem Bereich eine zweite Dichtung aufweisen, die sowohl die Außenfläche als auch den Zylinderkopf dichtend berührt. In Verbindung mit einer weiteren Dichtung in Richtung Brennraum entsteht so eine gasdichte Druckkammer, in der sich Druck zum Schließen des Ventils aufbauen kann. Der Druck kann in an sich bekannter Weise über eine Leitung in die Druckkammer geführt werden. Zur Verbesserung der Gebrauchseigenschaften kann der Leitung ein Druckspeicher zugeordnet sein. Eine hydropneumatische Ausbildung der Ventilfeder oder eine mechanische Ventilfeder mit einem hydraulischen Übertragungselement ist der funktionsweise der pneumatischen Ventilfeder oder der pneumatischen Ventilfeder kombiniert mit einer mechanischen Ventilfeder sehr ähnlich und wird hier nicht näher beschrieben.

Das Paßstück ist vorteilhafterweise in einer Nut des Ventilschaftes in axialer Richtung festgelegt und auf der der Nut zugewandten Seite mit einer gewölbten Oberfläche und auf der der Klemmvorrichtung zugewandten Seite mit einer zumindest teilweise konischen Oberfläche versehen. Auch diese Ausgestaltung bewirkt eine exakte und verkantungsfreie Zuordnung von Tassenstößel zu Ventilschaft, wobei die konische Oberfläche der der Klemmvorrichtung zugewandten Seite eine einfache Verspannung der beiden Teile miteinander bedingt. Berühren kegelförmige Innenfläche und konische Oberfläche einander flächig anliegend, ist die Flächenpressung besonders gering und gleichmäßig. In diesem Fall können bevorzugt in wirtschaftlicher Hinsicht günstige Materialien zur Anwendung gelangen.

Im Hinblick auf eine wirtschaftlich günstige Herstellbarkeit kann es sinnvoll sein, die Passungen und Toleranzen nicht zu eng auszulegen. Zur Verwirklichung dieses Zieles, also beispielsweise zum Ausgleich von Fluchtungsfehlern, kann das Paßstück auf der der Nut zugewandten Seite eine gewölbte, linsenförmige Oberfläche aufweisen und auf der der Klemmvorrichtung zugewandten Seite eine L-förmige Gestalt, wobei das Paßstück in eine entsprechende Ausnehmung der Klemmvorrichtung eingreift, die Ausnehmung in axialer Richtung zur geringen Verspannung der Teile berührt und der Ausnehmung in radialer Richtung mit Abstand benachbart zugeordnet ist. Darüber hinaus ist von Vorteil, daß eine Umfangsbewegung des Ventilschaftes relativ zum Tassenstößel bewirkt werden kann, wodurch ein einseitiger Verschleiß am Ventilsitz verhindert wird. Eine lange Gebrauchsdauer ist dadurch gewährleistet.

In Abhängigkeit von den jeweiligen Gegebenheiten des Anwendungsfalles kann die Ventilfeder durch eine mechanische Druckfeder gebildet sein. Es besteht aber auch die Möglichkeit, die Ventilfeder pneumatisch auszubilden oder die mechanische Ventilfeder mit der pneumatischen Ventilfeder zu kombinieren. Bei Verwendung pneumatischer Ventilfedern oder einer Kombination aus pneumatischen und mechanischen Ventilfedern ist darauf zu achten, daß sich im durch den Tassenstößel einerseits und den Zylinderkopf andererseits begrenzten Hohlraum ein ausreichend großer Druck zum einwandfreien Schließen des Ventils, auch bei hohen Drehzahlen, aufbauen kann. Eine pneumatische Ventilfeder eröffnet die Möglichkeit der Regelung der Federsteifigkeit durch Einstellen des Gasdruckes, z. B. drehzahlabhänging. Der Tassenstößel ist innenseitig derart ausgebildet, daß er als Kontaktfläche für die Ventilfeder genutzt werden kann. Die Verwendung mechanischer Ventilfedern, wobei beispielsweise auch zwei Ventilfedern in radialer Richtung ineinanderliegend angeordnet sein können, sowie die Kombination von mechanischen und pneumatischen Ventilfedern, bieten sich insbesondere für Serienfahrzeuge an. Eine ausschließlich pneumatische Ausbildung der Ventilfeder ist insbesondere dann sinnvoll, wenn die Verbrennungskraftmaschine mit sehr hohen Drehzahlen betrieben wird. Dies ist beispielsweise im Rennsport der Fall.

Das Gehäuse ist innenseitig als Kontaktfläche für die Ventilfeder ausgebildet. Diese Ausgestaltung bedingt einen teilearmen Aufbau und eine geringe Bauhöhe des Ventiltriebs.

Der Gegenstand der vorliegenden Erfindung wird nachfolgend anhand der Zeichnungen weiter erläutert. Diese zeigen die zu berücksichtigenden Einzelkomponenten teilweise in schematischer Darstellung.

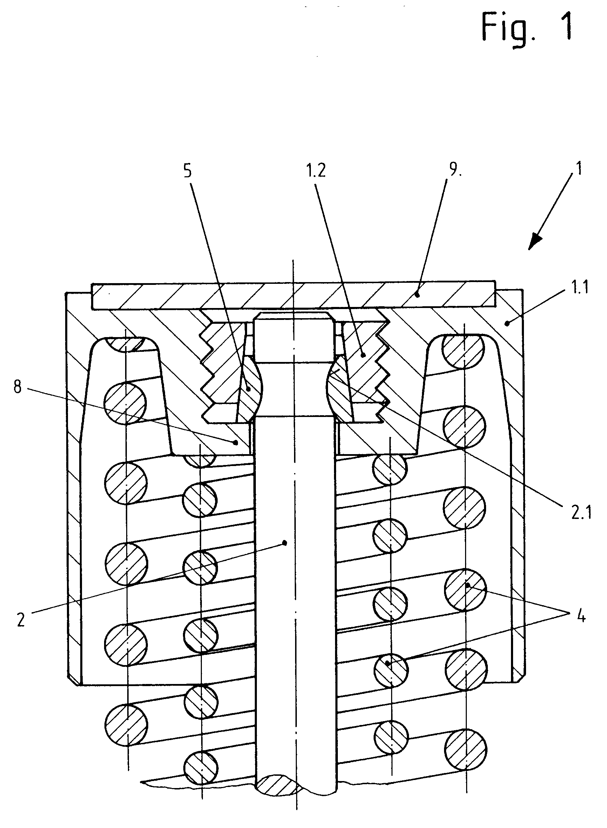

In den Figuren 1, 2 und 3 ist ein Ventiltrieb dargestellt, umfassend einen Tassenstößel 1, der auf einem Ventilschaft 2 eines Ventils festgelegt ist und verschiedenartig gestaltete Ventilfedern, die in Bewegungsrichtung des Ventils einerseits im hier nicht dargestellten Zylinderkopf und andererseits am Tassenstößel 1 abgestützt sind. Der Tassenstößel 1 übernimmt gleichzeitig die Funktion eines Ventilfedertellers.

In den Figuren 1 bis 5 ist eine Anbindung des Ventilschaftes an den Tassenstößel dargestellt, die erfindungsgemäß Druck- und Zugkräfte übertragen kann.

In Figur 1 ist das Paßstück 5 zweiteilig ausgebildet und besteht aus metallischem Werkstoff. Es ist in radialer Richtung zwischen der Nut 2.1 des Ventilschaftes 2 und der Klemmvorrichtung 1.2, die in das Gehäuse 1.1 engeschraubt ist, eingeklemmt. Sowohl das Paßstück 5 als auch die Klemmvorrichtung 1.2 weisen Berührungsflächen auf, die kegelförmig ausgebildet sind und einander flächig anliegend berühren. Als Widerlager zur Verspannung von Klemmvorrichtung 1.2 und Paßstück 5 ist ein Vorsprung 8 vorgesehen, der einstückig mit dem Gehäuse 1.1 ausgebildet ist und das Paßstück 5 in axialer Richtung einseitig untergreift. Ein Teil des Gehäuses 1.1 ist durch eine besonders verschleißfeste Panzerplatte 9 gebildet. Die Panzerplatte 9 kann beispielsweise als Ventilspielausgleichselement ausgebildet sein. Das Gehäuse 1.1 wird innenseitig in axialer Richtung von zwei parallel wirkenden mechanischen Ventilfedern anliegend berührt. Diese Ausgestaltung stellt nur ein Beispiel dar. Auch sind Anwendungsfälle denkbar, in denen lediglich eine Ventilfeder 4 gegen den Tassenstößel 1 abgestützt ist. Die hier dargestellte Klemmverbindung kann weitestgehend spielfrei Zug- und Druckkräfte übertragen.

Die Klemmkraft wird durch das Anzugsmoment im Gewinde von Gehäuse 1.1 und Klemmvorrichtung 1.2 bestimmt. Bei entsprechender Auslegung der Paßstücke 5 können auch in Umfangsrichtung Kräfte übertragen werden, so daß die Rotationsanregung des Tassenstößels 1 über den Ventilschaft 2 an das Ventil weitergegeben wird. Einem ungleichmäßigen Verschleiß von Ventilsitz und Panzerplatte 9 wird hierdurch vorgebeugt.

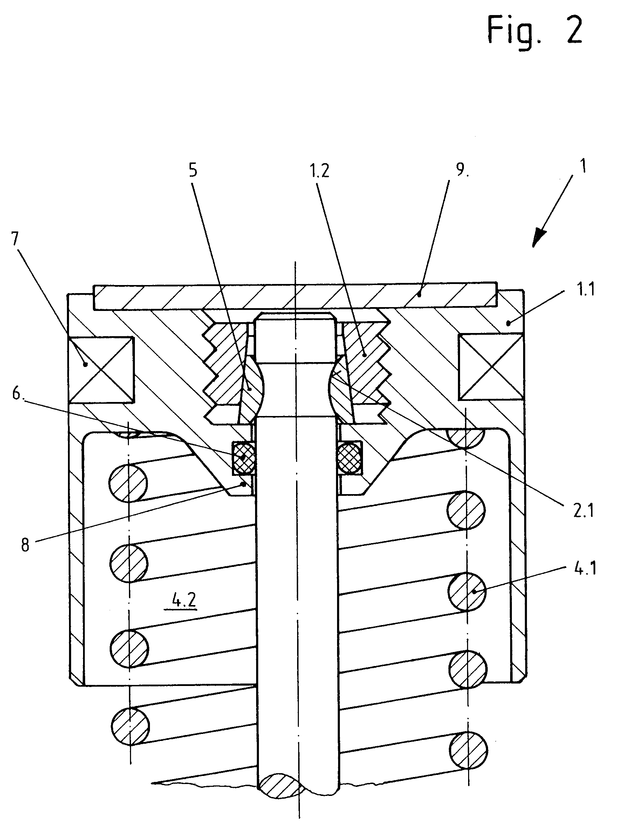

Der in Figur 2 dargestellte Ventiltrieb unterscheidet sich hinsichtlich seiner Ausgestaltung von dem in Figur 1 dargestellten durch eine Kombination aus mechanischer Ventilfeder und pneumatischer Ventilfeder. Die Funktion ist der vorstehend beschriebenen sehr ähnlich, wobei das Gehäuse 1.1 des Tassenstößels 1 durch eine erste Dichtung 6 und eine zweite Dichtung 7 ergänzt ist. Die erste Dichtung 6 ist im Vorsprung 8 in radialer Richtung zwischen diesem und dem angrenzenden Ventilschaft 2 angeordnet und berührt diese beiden Teile unter Vorspannung dichtend. Die zweite Dichtung 7 ist entlang der axialen Ausdehnung des Gehäuses 1.1 angeordnet und dichtet den Spalt zwischen einer hier nicht dargestellten Führungsbuchse, die Bestandteil des Zylinderkopfes sein kann, und dem Gehäuse 1.1 ab. Diese Ausgestaltung weist den Vorteil auf, daß die mechanische Ventilfeder nur derart ausgelegt zu werden braucht, daß sie im unteren Drehzahlbereich der Verbrennungskraftmaschine das Ventil zuverlässig in Geschlossenstellung überführt. Die Materialermüdung der Ventilfeder 4 ist dementsprechend gering, ebenso wie die Gefahr eines Ventilfederbruchs. Im höheren Drehzahlbereich kann der Tassenstößel in an sich bekannter Weise von einem pneumatischen Medium druckbeaufschlagt werden. Hierbei ist von Vorteil, daß das Ventil außerordentlich rasch in Geschlossenstellung überführt werden kann, ohne daß die mechanischen

Belastungen beispielsweise auf eine entsprechend stark ausgelegte Ventilfeder zu einem Defekt im Ventiltrieb führen könnten.

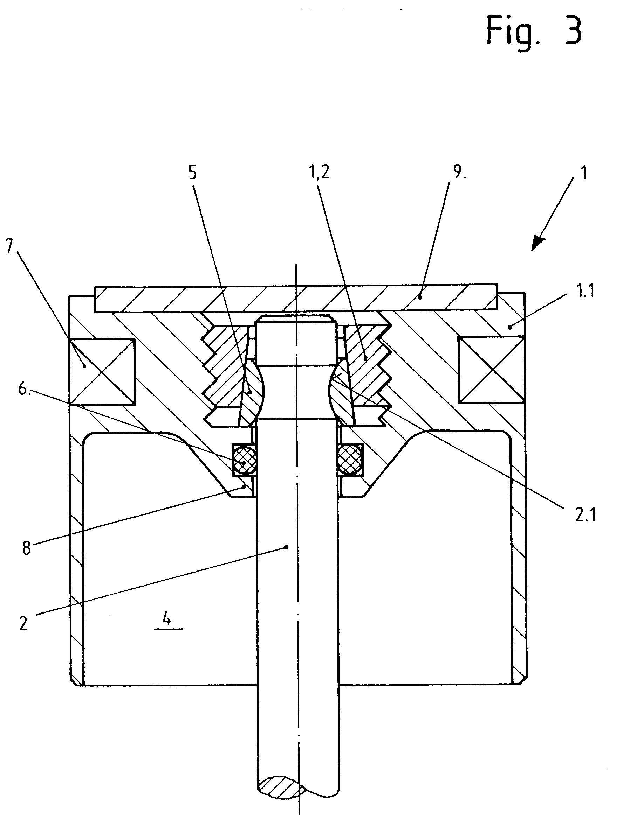

In Figur 3 ist eine Ausführung ähnlich den Ausführungen aus Figur 1 und 2 dargestellt, wobei die Ventilfeder 4 pneumatisch ausgebildet ist. Hierbei ist von Vorteil, daß die Ventilfedersteifigkeit durch den Gasdruck, beispielsweise drehzahlabhängig, regelbar ist. Diese Variante bietet sich insbesondere für Verbrennungskraftmaschinen an, die mit hohen Drehzahlen betrieben werden, wie beispielsweise Motoren, die im Rennsport zum Einsatz gelangen. Ein derart ausgestalteter Ventiltrieb zeichnet sich durch eine zuverlässige Betätigung der Ventile auch bei hohen Drehzahlen aus.

Dadurch, daß der Tassenstößel 1 die Funktion bisher bekannter Ventilfedertellern übernimmt und auch die Funktion des ansonsten am Ventilschaft festgelegten Kolbens, weisen die Ausgestaltungen nach den Figuren 1 bis 3 eine besonders geringe Bauhöhe durch einen deutlich verkürzten Ventilschaft, eine einfache Herstellbarkeit und gute Gebrauchseigenschaften in allen Betriebsbereichen der Verbrennungskraftmaschine während einer langen Gebrauchsdauer auf.

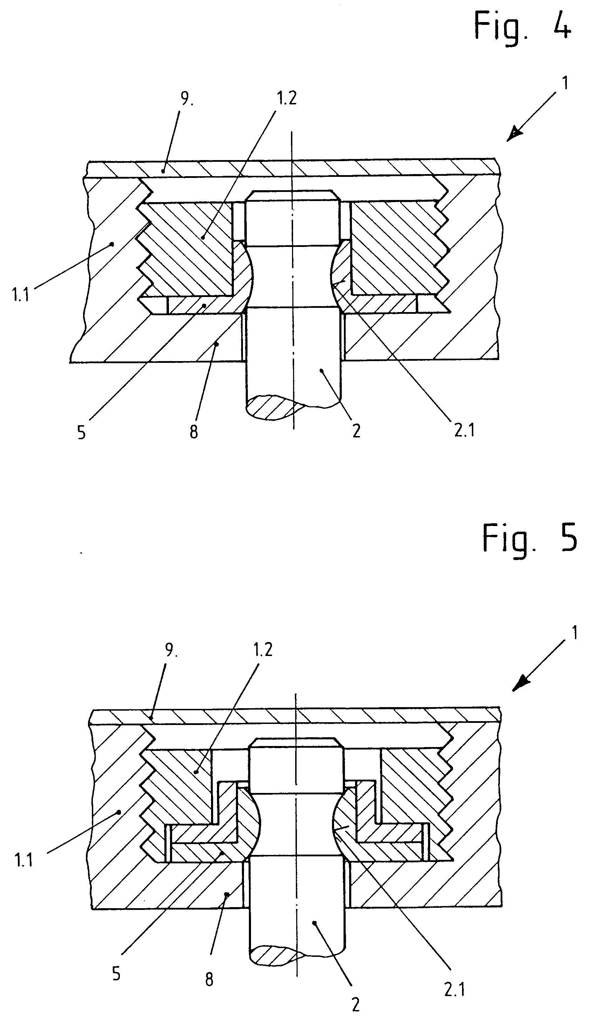

Die Figuren 4 und 5 zeigen jeweils einen Ausschnitt aus dem Tassenstößel 1, bestehend aus Gehäuse 1.1 und Klemmvorrichtung 1.2 sowie dem Paßstück 5, das den Ventilschaft 2 und den Tassenstößel 1 miteinander verbindet.

In den Figuren 4 und 5 ist jeweils ein im wesentlichen entlang seiner radialen Außenfläche zylindrisches Paßstück 5 gezeigt, das einerseits in einer Nut 2.1 des Ventilschaftes 2 festgelegt ist und andererseits entlang seines radial nach außen gerichteten Vorsprunges zwischen dem Gehäuse 1.1 und der Klemmvorrichtung 1.2 des Tassenstößels 1. Die Anordnungen gemäß der Figuren 4 und 5 unterscheiden sich voneinander insofern, als insbesondere bei Figur 5 ein geringer radialer Versatz des Ventilschaftes 2 gegenüber dem Tassenstößel 1 zulässig ist. Außerdem ist es gemäß dieser Ausgestaltungen besonders einfach möglich, eine Umfangsbewegung des Ventilschaftes 2 relativ zum Tassenstößel 1 zu bewirken, was bei entsprechender Ausbildung des Paßstücks 5 gemäß Figur 1 ebenfalls denkbar ist. Durch eine weitgehend spielfreie Verschraubung entsteht auch gemäß der Figuren 4 und 5 eine Verbindung, die Zug- und Druckkräfte auf den Ventilschaft 2 übertragen kann und gemäß Figur 5 geringe Radialbewegungen, z.B. zum Ausgleich von Fluchtungsfehlern, zuläßt.

## Patentansprüche

1. Zylinderkopf einer Verbrennungskraftmaschine mit Ventiltrieb, umfassend einen Tassenstößel (1), der auf einen Ventilschaft (2) eines Ventils aufgestülpt und befestigt ist, einen am Ventilschaft (2) festgelegten Ventilfederteller und zumindest eine Ventilfeder (4), die in Bewegungsrichtung des Ventils einerseits im Zylinderkopf und andererseits am Ventilfederteller abgestützt ist, wobei der Tassenstößel (1) und der Ventilfederteller einstückig ausgebildet sind und wobei der Tassenstößel (1) zumindest zweiteilig ausgebildet ist, wobei der erste Teil durch ein im wesentlichen topfförmiges Gehäuse (1.1) gebildet ist und der zweite Teil durch eine im Gehäuse (1.1) kraft- und/oder formschlüssig angeordnete Klemmvorrichtung (1.2), dadurch gekennzeichnet, daß die Klemmvorrichtung (1.2) durch einen Hohlzylinder gebildet ist, daß der Hohlzylinder auf seiner in radialer Richtung außenliegenden Mantelfläche ein Außengewinde aufweist und daß der Hohlzylinder eine zumindest teilweise kegelförmige Innenfläche aufweist, daß der Tassenstößel (1) durch zumindest ein Paßstück (5) am Ventilschaft (2) festgelegt ist, daß das Paßstück (5) in radialer Richtung zwischen dem Ventilschaft (2) und der Klemmvorrichtung (1.2) angeordnet ist und daß das Paßstück (5) von einem radial nach innen weisenden Vorsprung (8) des Gehäuses (1) untergriffen und mit diesem verspannt ist.

2. Zylinderkopf nach Anspruch 1, dadurch gekennzeichnet, daß in radialer Richtung zwischen dem Vorsprung (8) und dem Ventilschaft (2) eine erste Dichtung (6) angeordnet ist, die beide Teile dichtend berührt.

3. Zylinderkopf nach Ansprüchen 1 bis 2, dadurch gekennzeichnet, daß das Gehäuse (1.1) in zumindest einem Bereich seiner zylindrischen Außenfläche eine zweite Dichtung (7) aufweist, die den Spalt zwischen Zylinderkopf und Tassenstößel (1) abdichtet.

4. Zylinderkopf nach Ansprüchen 1 bis 3, dadurch gekennzeichnet, daß das Paßstück (5) in einer Nut (2.1) des Ventilschafts (2) in axialer Richtung festgelegt ist und auf der der Nut (2.1) zugewandten Seite eine gewölbte Oberfläche und auf der der Klemmvorrichtung zugewandten Seite eine zumindest teilweise konische Oberfläche aufweist.

5. Zylinderkopf nach Ansprüchen 1 und 4, dadurch gekennzeichnet, daß die kegelförmige Innenfläche und die konische Oberfläche einander flächig anliegend berühren.

6. Zylinderkopf nach Ansprüchen 1 bis 5, dadurch gekennzeichnet, daß das Paßstück (5) auf der der Nut (2.1) zugewandten Seite eine gewölbte Oberfläche aufweist und auf der der Klemmvorrichtung (1.2) zugewandten Seite eine L-förmige Gestalt und daß das Paßstück (5) in eine Ausnehmung der Klemmvorrichtung (1.2) eingreift, die Ausnehmung in axialer Richtung berührt und der Ausnehmung in radialer Richtung mit Abstand benachbart zugeordnet ist.

7. Zylinderkopf nach Ansprüchen 1 bis 6, dadurch gekennzeichnet, daß die Ventilfeder (4) durch eine mechanische Druckfeder gebildet ist.

8. Zylinderkopf nach Ansprüchen 1 bis 7, dadurch gekennzeichnet, daß die Ventilfeder (4) pneumatisch ausgebildet ist.

9. Zylinderkopf nach Ansprüchen 1 bis 7, dadurch gekennzeichnet, daß die Ventilfeder (4) mechanisch und pneumatisch ausgebildet ist.

## Claims

1. A cylinder head of an internal combustion engine with valve train, comprising a bucket tappet (1) which is placed over a valve stem (2) of a valve and secured, a valve-spring plate fixed on the valve stem (2), and at least one valve spring (4), which in the direction of motion of the valve is supported on one side in the cylinder head and on the other side against the valve-spring plate, the bucket tappet (1) being formed integrally with the valve-spring plate and the bucket tappet (1) being formed of at least two parts, the first part being formed by an essentially cup-shaped housing (1.1) and the second part by a clamping device (1.2) arranged with frictional and/or positive engagement in the housing (1.1), characterised in that the clamping device (1.2) is formed by a hollow cylinder, in that the hollow cylinder has, on its radially outer circumferential surface, an external thread and in that the hollow cylinder has an at least partially conical inner surface, in that the bucket tappet (1) is fixed on the valve stem (2) by at least one fitting piece (5), in that the fitting piece (5) is arranged radially between the valve stem (2) and the clamping device (1.2) and in that the fitting piece (5) is overlapped at the bottom by a radially inward-pointing projection (8) of the housing (1) and is braced against the said projection.

2. A cylinder head according to claim 1, characterised in that arranged radially between the projection (8) and the valve stem (2) is a first seal (6) which makes sealing contact with both parts.

3. A cylinder head according to either of claims 1 and 2, characterised in that the housing (1.1) has, in at least one area of its cylindrical outer surface, a second seal (7), which seals off the gap between the cylinder head and the bucket tappet (1).

4. A cylinder head according to any of claims 1 to 3, characterised in that the fitting piece (5) is fixed axially in a groove (2.1) in the valve stem (2), has an arched surface on the side facing the groove (2.1), and has an at least partially conical surface on the side facing the clamping device,

5. A cylinder head according to claims 1 and 4, characterised in that the conical inner surface and the conical surface rest flat against one another.

6. A cylinder head according to any of claims 1 to 5, characterised in that the fitting piece (5) has an arched surface on the side facing the groove (2.1) and has an L-shaped configuration on the side facing the clamping device (1.2), and in that the fitting piece (5) engages in a recess in the clamping device (1.2), makes contact with the recess in the axial direction and is arranged adjacent to the recess, with a clearance, in the radial direction.

7. A cylinder head according to any of claims 1 to 6, characterised in that the valve spring (4) is formed by a mechanical compression spring.

8. A cylinder head according to any of claims 1 to 7, characterised in that the valve spring (4) is of pneumatic design.

9. A cylinder head according to any of claims 1 to 7, characterised in that the valve spring (4) is of mechanical and pneumatic design.

## Revendications

1. Culasse de moteur à combustion interne pourvue d'une commande de soupape comprenant un poussoir en cloche (1) qui est renversé et fixé sur une tige (2) de soupape, une cuvette de ressort de soupape fixée sur la tige (2) de soupape et au moins un ressort (4) de soupape prenant appui, dans la direction du mouvement de la soupape, d'une part dans la culasse et d'autre part, sur la cuvette de ressort de soupape, le poussoir en cloche (1) et la cuvette de ressort de soupape étant formés d'une seule pièce et le poussoir en cloche (1) étant formé d'au moins deux parties, la première partie étant formée par un carter (1.1) sensiblement en forme de cuvette et la deuxième partie par un dispositif de serrage (1.2) logé dans le carter (1.1) dans lequel il est bloqué sous l'effet d'une force et/ou encastré fermement, cette culasse étant caractérisée en ce que le dispositif de serrage (1.2) est formé par un cylindre creux, en ce que le cylindre creux présente un filetage mâle sur sa surface périphérique située à l'extérieur en direction radiale et est pourvu d'une surface intérieure de forme au moins partiellement conique, en ce que le poussoir en cloche (1) est fixé sur la tige (2) de soupape par au moins une pièce d'ajustage (5), en ce que la pièce d'ajustage (5) est située en direction radiale entre la tige (2) de soupape et le dispositif de serrage (1.2) et est emprisonnée par une saillie (8) du carter (1) dirigée radialement vers l'intérieur et assujettie, mise sous tension par celle-ci.

2. Culasse selon la revendication 1, caractérisée en ce qu'un premier joint (6) est placé entre la saillie (8) et la tige (2) de soupape dans le sens axial, lequel joint est en contact étanche avec les deux pièces.

3. Culasse selon les revendications 1 à 2, caractérisée en ce que le carter (1.1) est pourvu, dans une région au moins de sa surface cylindrique extérieure, d'un deuxième joint (7) qui rend étanche l'intervalle situé entre la culasse et le poussoir en cloche (1).

4. Culasse selon les revendications 1 à 3, caractérisée en ce que la pièce d'ajustage (5) est fixée en direction axiale dans une gorge (2.1) de la tige (2) de soupape et qu'elle présente, sur le côté tourné vers la gorge (2.1), une surface bombée et, sur le côté tourné vers le dispositif de serrage, une surface au moins partiellement conique.

5. Culasse selon les revendications 1 et 4, caractérisée en ce qu'il existe entre la surface intérieure conique et la surface conique voisine un contact superficiel.

6. Culasse selon les revendications 1 à 5, caractérisée en ce que la pièce d'ajustage (5) présente, sur le côté tourné vers la gorge (2.1), une surface bombée et, sur le côté tourné vers le dispositif de serrage (1.2), une configuration en forme de L, et en ce que la pièce d'ajustage (5) est engagée dans un évidement du dispositif de serrage (1.2), qu'elle est en contact avec cet évidement dans le sens axial, et qu'elle est disposée de manière contiguë à l'évidement dans le sens radial, avec un écartement par rapport à celui-ci.

7. Culasse selon les revendications 1 à 6, caractérisée en ce que le ressort (4) de soupape est formé par un ressort mécanique à pression.

8. Culasse selon les revendications 1 à 7, caractérisée en ce que le ressort (4) de soupape est conçu sous forme pneumatique.

9. Culasse selon les revendications 1 à 7, caractérisée en ce que le ressort (4) de soupape est conçu sous forme mécanique et pneumatique.
